(19) Europäisches Patentamt / European Patent Office / Office européen des brevets

(11) **EP 1 764 967 B1**

(12) **EUROPEAN PATENT SPECIFICATION**

(45) Date of publication and mention
of the grant of the patent:
**12.11.2008 Bulletin 2008/46**

(51) Int Cl.:
*H04L 25/02* (2006.01)      *H04B 7/04* (2006.01)

(21) Application number: **06120675.1**

(22) Date of filing: **14.09.2006**

(54) **Apparatus and methods for calibrating channels in radio communication systems using multiple antennas**

Vorrichtungen und Verfahren zur Kanalkalibrierung in Funk-Kommunikationssysteme mit mehreren Antennen

Dispositifs et procédés pour la calibration de canal dans un système de radiocommunication avec antennes multiples

(84) Designated Contracting States:
**DE FR GB IT SE**

(30) Priority: **16.09.2005 KR 20050086881**

(43) Date of publication of application:
**21.03.2007 Bulletin 2007/12**

(73) Proprietor: **Samsung Electronics Co., Ltd.**
**Suwon-si, Gyeonggi-Do (KR)**

(72) Inventors:
• **Hwang, Gun-Chul**
**Gwangju (KR)**
• **Choi, Soong-Yoon**
**Gyeonggi-do (KR)**
• **Chae, Chan-Byoung**
**Seoul (KR)**
• **Nam, Seung-Hoon**
**Seoul (KR)**

(74) Representative: **Grünecker, Kinkeldey,**
**Stockmair & Schwanhäusser**
**Anwaltssozietät**
**Leopoldstraße 4**
**80802 München (DE)**

(56) References cited:
**WO-A-20/04039022**

**Description**

**BACKGROUND OF THE INVENTION**

1. Field of the Invention

The present invention relates generally to a Time Division Duplexing-Multiple Input Multiple Output (TDD-MIMO) radio communication system, and in particular, to an apparatus and method for calibrating an estimated channel in a radio communication system.

2. Description of the Related Art

In a general TDD-MIMO radio communication system, a downlink (DL) channel and an uplink (UL) channel on air are reciprocal to each other but a DL channel state information (CSI) and a UL CSI, which are detected at actual baseband stages, are not reciprocal to each other. The reason for this is that gains as well as phases are different between a base station (BS) TX (transmission) chain and a mobile station (MS) RX (receive) chain and between an MS TX chain and a BS RX chain.

Therefore, when the UL CSI is used, as it is, for DL weighting, the TDD-MIMO radio communication system degrades in performance. That is, because a UL CSI estimated at a BS is different from an actual DL CSI, optimal weighting obtained using the BS UL CSI is not optimal for a DL channel, which degrades the system performance. In order to solve the problem of mismatch between the CSIs, calibration must be made to equalize the estimated CSI and the actual CSI.

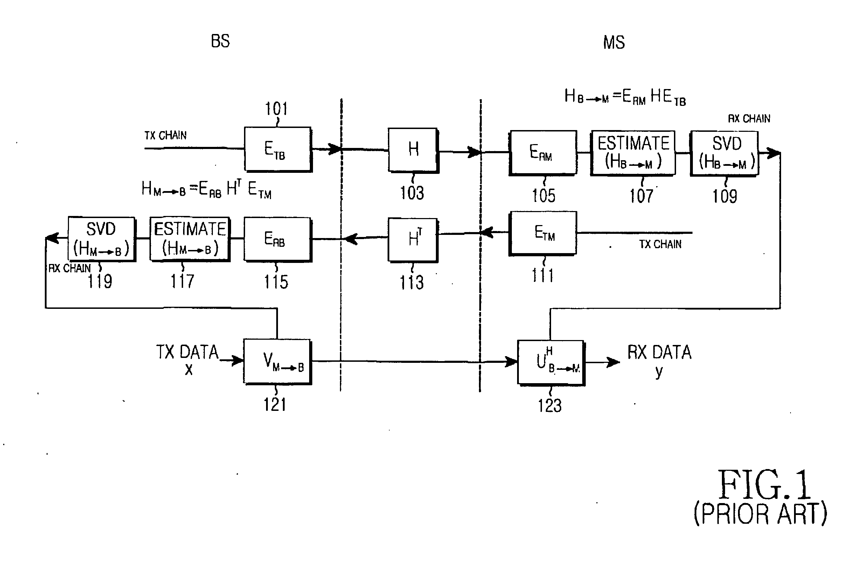

Referring to FIG. 1, a DL signal generated at a BS is transmitted through a TX chain 101 and a DL channel 103 and received at an MS. The received DL signal is transferred through an RX chain 105 to a baseband stage of the MS. A channel estimator 107 of the baseband stage estimates a DL channel $H_{B \to M}$ using the received DL signal. A Singular Value Decomposition (SVD) unit 109 SVD-processes the estimated DL CSI to create an RX eigenvector matrix $U^H_{B \to M}$.

Likewise, a UL signal generated at the MS is transmitted through a TX chain 111 and a UL channel 113 and received at the BS. The received UL signal is transferred through an RX chain 115 to a baseband stage of the BS. A channel estimator 117 of the baseband stage estimates a UL channel $H_{M \to B}$ using the received UL signal. An SVD unit 119 SVD-processes the estimated UL CSI to create a TX eigenvector matrix $V_{M \to B}$.

A weight multiplier 121 of the BS multiplies TX data by the TX eigenvector matrix $V_{M \to B}$ to form a beam prior to transmission. A weight multiplier 123 of the MS multiplies a signal received from the BS by the RX eigenvector matrix $U^H_{B \to M}$ to restore RX data.

The DL channel 103 and the UL channel 113 are reciprocal to each other but gains as well as phases are different between the RX chains 105 and 115 and between the TX chains 101 and 111. Therefore, a UL CSI estimated at the channel estimator 117 of the BS is different from an actual DL CSI. Therefore, when a DL weight is calculated using the UL CSI as the DL CSI, the system performance degrades. Accordingly, calibration must be made to approximate the estimated UL CSI to the actual DL CSI.

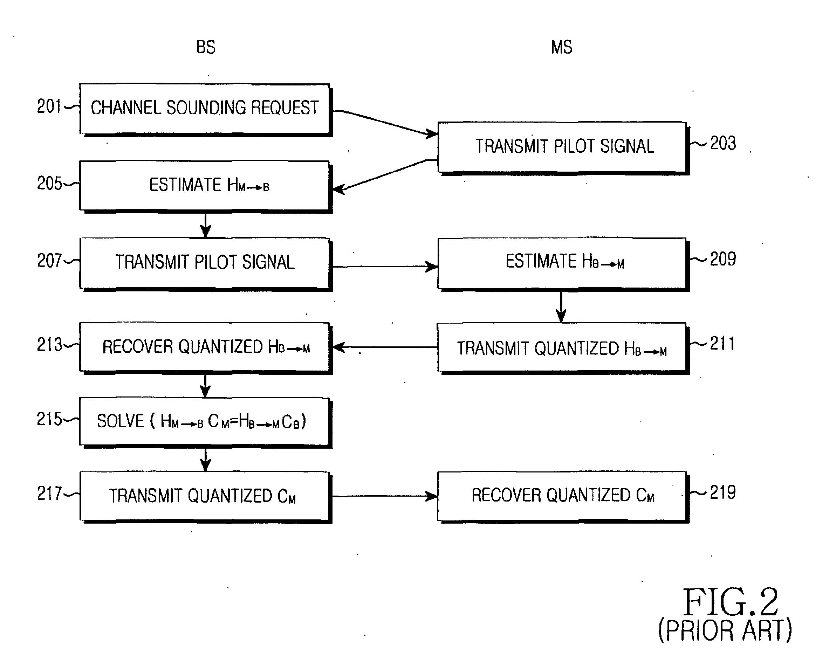

A procedure for calibrating a CSI in a prior TDD-MIMO system is illustrated in FIG 2.

Before describing the procedure, the parameters used herein are as follows:

When TX chains are completely isolated with respect to different TX antennas, the gain and phase of the TX chain can be modeled as a diagonal matrix $E_{TB}$. In addition, when RX chains are completely isolated with respect to different RX antennas, the gain and phase of the RX chain can be modeled as a diagonal matrix $E_{RM}$.

Assuming that a response from a digital-to-analog converter (DAC) of a transmitter to each antenna is $E_{TB} = \{t_1, t_2, t_3\}$, a response from an antenna of a receiver to an analog-to-digital converter (ADC) is $E_{RM} = \{r_1, r_2, r_3\}$, and a radio channel response is $H$, a composite channel response estimated at the receiver is expressed as Equation (1):

$$H_{B \to M} = E_{RM} H E_{TB}$$
$$H_{M \to B} = E_{RB} H^T E_{TM}$$

$$\ldots \ldots (1)$$

Because an estimated DL CSI is different from an actual DL CSI, in the conventional art, a calibration operation is performed as expressed in Equation (2):

$$H_{B \to M} C_B = E_{RM} H E_{TB} C_B$$

$$H_{M \to B} C_M = E_{RB} H^T E_{TM} C_M$$

Because two formulas in Equation (2) are transposable, calibration matrixes $C_B$ and $C_M$ are expressed as Equation (3):

$$C_B = (E_{TB})^{-1} E_{RB}$$

$$C_M = (E_{TM})^{-1} E_{RM}$$

$$\ldots \ldots (3)$$

A conventional procedure for obtaining the calibration matrixes $C_B$ and $C_M$ will be described below.

Referring to FIG. 2, a BS transmits a channel sounding request to an MS in step 201. Upon receipt of the request, the MS transmits a channel sounding signal (or a pilot signal) to the BS in step 203. In step 205, the BS estimates a UL CSI $H_{B \to M}$ using a UL pilot signal received from the MS.

In step 207, the BS transmits a pilot signal to the MS. In step 209, the MS estimates a DL CSI $H_{M \to B}$ using the pilot signal received from the BS. In step 211, the MS quantizes the estimated DL CSI into data signal and transmits the data signal to the BS.

In step 213, the BS recovers the quantized DL CSI from the data signal received from the MS. In step 215, using the DL CSI and the UL CSI, the BS calculates calibration matrixes $C_B$ and $C_M$ satisfying Equation (4):

$$H_{M \to B} C_M = H_{B \to M} C_B$$

$$\ldots \ldots (4)$$

The BS uses the calibration matrix $C_B$ to calibrate an UL CSI, and transmits the calibration matrix $C_M$ to the MS.

That is, in step 217, the BS quantizes the calculated calibration matrix $C_M$ into data signal and transmits the data signal to the MS. In step 219, the MS recovers the quantized calibration matrix $C_M$ from the data signal received from the BS. The recovered calibration matrix is used to calibrate a DL CSI.

As described above, the DL CSI estimated at the MS must be quantized into a data signal and the data signal must be transmitted to the BS (step 211). Similarly, the calculated at the BS must be quantized into a data signal and the data signal must be transmitted to the MS (step 217). This wastes a large amount of resources. Moreover, too much time is required to obtain information necessary for the calibration.

An example of the prior art is document WO 2004/039022.

## SUMMARY OF THE INVENTION

An object of the present invention is to substantially solve at least the above problems and/or disadvantages and to provide at least the advantages below. Accordingly, an object of the present invention is to provide an apparatus and method for calibrating an estimated channel in a TDD radio communication system.

Another object of the present invention is to provide an apparatus and method for minimizing the waste of resource for channel calibration in a TDD radio communication system.

A further object of the present invention is to provide an apparatus and method for minimizing the waste of time for channel calibration in a TDD radio communication system.

According to one aspect of the present invention, a base station apparatus for a radio communication system using multiple antennas, includes a channel estimator for receiving a UL sounding signal to estimate a first UL CSI and receiving a UL sounding signal weighted with a DL CSI to estimate a second UL CSI; and a calculator for calculating calibration values for the respective antenna pairs using the first UL CSI and the second UL CSI.

According to another aspect of the present invention, a mobile station apparatus for a radio communication system using multiple antennas, includes a channel estimator for estimating a DL CSI using a DL pilot signal received from a base station; a sounding signal generator for weighting a sounding signal with the DL CSI to generate a channel calibration sounding signal; and a transmitter for transmitting the channel calibration sounding signal to the base station.

According to a further aspect of the present invention, a method for operating a base station in a radio communication system using multiple antennas, includes receiving a UL sounding signal to estimate a first UL CSI; receiving a UL sounding signal weighted with a DL CSI to estimate a second UL CSI; and calculating calibration values for the respective antenna pairs using the first UL CSI and the second UL CSI.

According to still another aspect of the present invention, a method for operating a mobile station in a radio communication system using multiple antennas, includes receiving a DL pilot signal to estimate a DL CSI; weighting a sounding signal with the DL CSI to generate a channel calibration sounding signal; and transmitting the channel calibration sounding signal to a base station.

According to still another aspect of the present invention, a method for calibrating a channel in a radio communication system using multiple antennas, includes estimating, at a transmitter, a first UL CSI using a UL sounding signal received from a receiver; estimating, at the receiver, a DL CSI using a DL pilot signal received from the transmitter, weighting the UL sounding signal with the DL CSI, and transmitting the DL CSI-weighted sounding signal to the transmitter; estimating, at the transmitter, a second UL CSI using the DL CSI-weighted sounding signal; and calculating, at the transmitter, channel calibration values for the respective antenna pairs using the first UL CSI and the second UL CSI.

## BRIEF DESCRIPTION OF THE DRAWINGS

The above and other objects, features and advantages of the present invention will become more apparent from the following detailed description when taken in conjunction with the accompanying drawings in which:

FIG. 1 is a diagram illustrating a mismatch between CSIs in a conventional SVD-MIMO system;
FIG. 2 is a flow diagram illustrating a procedure for calibrating a CSI in a conventional TDD-MIMO system;
FIG. 3 is a block diagram of a radio communication system using multiple antennas according to the present invention;
FIG. 4 is a flowchart illustrating a procedure for performing a calibration mode of a transmitter in a radio communication system using multiple antennas according to the present invention; and
FIG. 5 is a flowchart illustrating a procedure for performing a calibration mode of a receiver in a radio communication system using multiple antennas according to the present invention.

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail. Also, the terms used herein are defined according to the functions of the present invention. Thus, the terms may vary depending on user's or operator's intent and usage. That is, the terms used herein must be understood based on the descriptions made herein.

The present invention provides a scheme for calibrating an estimated CSI in a TDD-MIMO radio communication system which is described in detail. In particular, the present invention provides a scheme for calibrating a CSI using minimum resource and time.

In the following description, "downlink (DL)" indicates a direction from a transmitter performing the calibration to a receiver and "uplink (UL)" indicates a direction from the transmitter to the receiver.

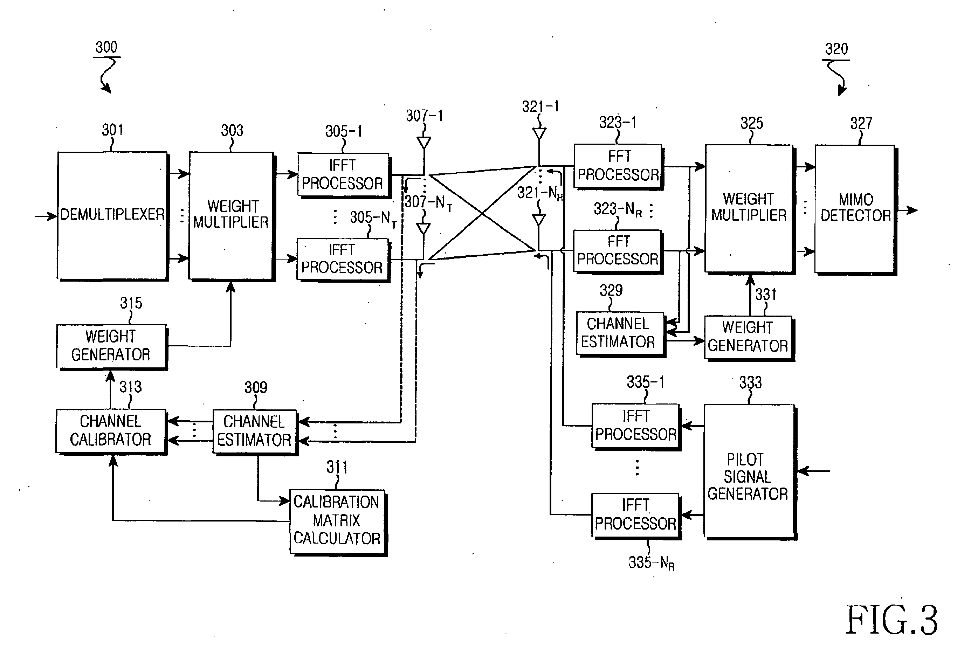

Referring to FIG. 3, a BS 300 of the radio communication system includes a demultiplexer 301, a weight multiplier 303, a plurality of Inverse Fast Fourier Transform (IFFT) processors 305-1 to 305-$N_T$, a plurality of antennas 307-1 to 307-$N_T$, a channel estimator 309, a calibration matrix calculator 311, a channel calibrator 313, and a weight generator 315. An MS 320 of the radio communication system includes a plurality of antennas 321-1 to 321-$N_R$, a plurality of Fast Fourier Transform (FFT) processor 323-1 to 323-$N_R$, a weight multiplier 325, a MIMO detector 327, a channel estimator 329, a weight generator 331, a pilot signal generator 333, a plurality of IFFT processors 335-1 to 335-$N_R$.

A calibrating side corresponds to the side that transmits data using a CSI. When the MS is the calibrating side, reference numerals 300 and 320 may denote the MS and the BS, respectively. On the other hand, the BS is the calibrating side, reference numerals 300 and 320 may denote the BS and the MS, respectively. The following description is made of an exemplary case where the BS is the calibrating side.

An operation of the BS 300 will now be described in detail.

The channel estimator 309 estimates a first UL CSI $H_{M \to B}(i,j)$ using pilot signals (or sounding signals) received through the antennas 307-1 to 307-$N_T$. In addition, the channel estimator 309 estimates a second UL CSI $H(i,j)$ using DL CSI-weighted pilot signals received through the antennas 307-1 to 307-$N_T$. The second UL channel $H(i,j)$ can be expressed as Equation (5):

$$H(i,j) = H_{M \to B}(i,j) \cdot H_{B \to M}(i,j)$$

$$\ldots \ldots (5)$$

where $i$ is an antenna index of the BS and $j$ is an antenna index of the MS.

First and second UL CSIs so estimated are provided to the calibration matrix calculator 311. Using the first and second UL CSIs, the calibration matrix calculator 311 calculates calibration values $C(i,j)$ for the respective antenna pairs, as expressed in Equation (6):

$$C(i,j) = \frac{H(i,j)}{(H_{M \to B}(i,j))^2}$$

$$\ldots \ldots (6)$$

The calculated calibration values $C(i,j)$ are provided to the channel calibrator 313.

Using the calibration values $C(i,j)$, the channel calibrator 313 calibrates the first UL CSI $H_{M \to B}(i,j)$ to output a calibrated channel response matrix $new\ H_{M \to B}(i,j)$, as expressed in Equation (7):

$$new\ H_{M \to B}(i,j) = H_{M \to B}(i,j) \cdot C(i,j)$$

$$\ldots \ldots (7)$$

Based on the calibrated channel response matrix $new\ H_{M \to B}(i,j)$, the weight generator 315 generates a weight matrix and provides the same to the weight multiplier 303.

The demultiplexer 301 demultiplexes input user data to output a TX vector. The user data is data that is encoded and modulated through a channel encoder and a modulator. The weight multiplier 303 multiplies the TX vector from the demultiplexer 301 by the weight matrix from the weight generator 315 to generate a plurality of antenna signals.

The generated antenna signals are provided to the corresponding IFFT processors 305-1 to 305-$N_T$. The IFFT processors 305-1 to 305-$N_T$ IFFT-process the antenna signals. The IFFT-processed signals are transmitted through the corresponding antennas 307-1 to 307-$N_T$. In detail, the IFFT-processed signals are converted into analog baseband signals, the analog baseband signals are converted into radio frequency (RF) signals, and the RS signals are transmitted through the corresponding antennas 307-1 to 307-$N_T$.

An operation of the MS 320 will now be described in detail.

A plurality of signals received through the antennas 321-1 to 321-$N_R$ are converted into baseband signals, and the base band signals are converted into digital signals (sample data). The digital signals are input to the corresponding FFT processors 323. The FFT processors 323-1 to 323-$N_R$ FFT-process the digital signals.

The channel estimator 329 extracts pilot signals (or sounding signals) from the output signals of the FFT processors 323-1 to 323-$N_R$ and estimates a DL CSI $H_{B \to M}(i,j)$ using the extracted pilot signals. As is well known in the art, for estimation of a DL channel, a BS inserts a pilot signal into data and a corresponding MS extracts the pilot signal from a received signal to estimate the DL channel.

Using the estimated DL CSI $H_{B \to M}(i,j)$ and/or information received from the BS, the weight generator 331 generates and outputs a weight matrix. For example, the weight generator 331 generates and outputs a codebook-based precoding matrix or an SVD-based eigenvector matrix. The weight multiplier 325 multiplies the output signals of the FFT processors 323-1 to 323-$N_R$ by the weight matrix of the weight generator 331. The MIMO detector 327 decodes the output signals of the weight multiplier 325 in accordance with a predetermined rule corresponding to a MIMO scheme, thereby outputting RX symbols. The RX symbols are demodulated and decoded by a demodulator and a channel decoder into original data.

In a calibration mode according to the present invention, the channel estimator 329 provides the estimated DL CSI $H_{B \to M}(i,j)$ to the pilot signal generator 333. The pilot signal generator 333 weights an input pilot signal with the estimated DL CSI $H_{B \to M}(j,j)$ and output the DL CSI-weighted pilot signals to the IFFT processors 335-1 to 335-$N_R$.

The IFFT processors 335-1 to 335-$N_R$ maps the DL CSI-weighted pilot signals to predetermined subcarrier positions and processes the resulting signals. The IFFT-processed signals are transmitted through the corresponding antennas 321-1 to 321-$N_R$. In detail, the IFFT-processed signals are converted into analog baseband signals, the analog baseband signals are converted into RF signals, and the RF signals are transmitted through the corresponding antennas 321-1 to 321-$N_R$. The DL CSI-weighted pilot signals are used to calculate the calibration matrix at the B S 300.

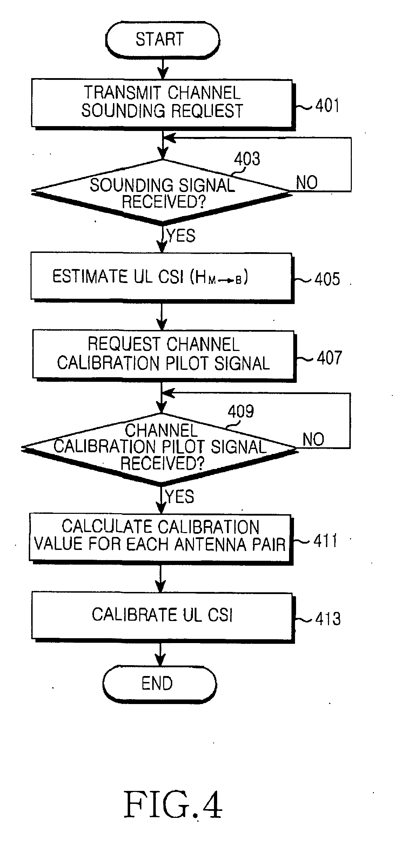

Referring to FIG. 4, the transmitter, which is the calibrating side and assumed to be the BS, measures a change in a channel with time when calibration is needed. The transmitter initiates a calibration mode when the measured channel change is less than or equal to a predetermined threshold.

The BS transmits a channel sounding request to the MS in a calibration mode, in step 401. In step 403, the BS determines if a sounding signal (pilot signal) is received from the MS. If so, the procedure advances to step 405; and if not, the procedure repeats step 403.

In step 405, the BS estimates a first UL CSI UL CSI $H_{M \to B}(i,j)$ using the received pilot signal. In step 407, the BS transmits a request for a pilot signal for channel calibration to the MS. Hereinafter, the pilot signal for channel calibration is simply referred to as "channel calibration pilot signal". In step 409, the BS determines if the channel calibration pilot signal (i.e., the DL CSI-weighted pilot signal) is received from the MS. If so, the procedure advances to step 411; and if not, the procedure repeats step 409.

In step 411, the BS estimates a second UL CSI using the received channel calibration pilot signal, and calculates calibration values $C(i,j)$ for the antenna pairs using the first and second UL CSIs, as expressed in Equation (6).

In step 413, the BS multiplies the estimated UL CSIs by the calibration values as expressed in Equation (7), thereby calibrating the UL CSIs. Thereafter, the BS calculates a weight matrix using the calibrated UL CSIs, multiplies a TX vector by the weight matrix, and transmits the resulting signal to the MS.

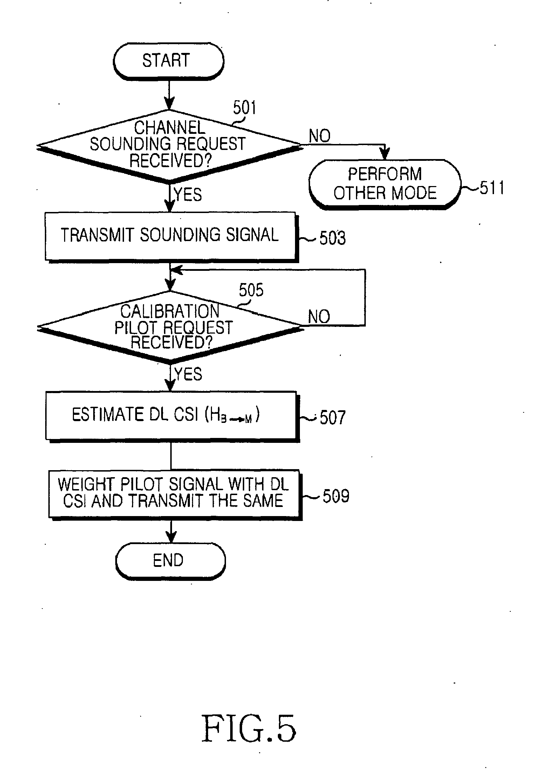

Hereinafter, the receiver is assumed to be the MS. Referring to FIG. 5, the MS determines in step 501 if a channel sounding request is received from the BS. If so, the procedure proceeds to step 503; and if not, the procedure proceeds to step 511. In step 511, the MS performs other mode. In step 503, the MS transmits a sounding signal (e.g., a pilot signal) to the BS.

In step 505, the MS determines if a request for a channel calibration pilot signal is received from the BS. If so, the procedure advances to step 507; and if not, the procedure repeats step 505. In step 507, the MS estimates a DL CSI $H_{B \to M}(i,j)$ using a DL pilot signal received from the BS. In step 509, the MS weights a UL pilot signal with the estimated DL CSI $H_{B \to M}(i,j)$ and transmits the DL CSI-weighted pilot signal (i.e., the channel calibration pilot signal) to the BS.

As described above, the information necessary for channel calibration is transmitted and received in analog format. Accordingly, it is possible to minimize the waste of resources and time necessary for channel calibration.

While the invention has been shown and described with reference to certain preferred embodiments thereof, it will be understood by those skilled in the art that various changes in form and details may be made therein without departing from the scope of the invention as further defined by the appended claims.

**Claims**

1. A base station apparatus for a radio communication system using multiple antennas, the base station apparatus comprising:

   a channel estimator (309) for receiving an uplink UL sounding signal to estimate a first UL channel state information CSI and receiving a UL sounding signal weighted with a downlink DL CSI to estimate a second UL CSI; and
   a calculator (311) for calculating calibration values for the respective antenna pairs using the first UL CSI and the second UL CSI.

2. The base station apparatus of claim 1, further comprising a channel calibrator (313) for calibrating the first UL CSI using the calibration values to obtain a calibrated channel response matrix.

3. The base station apparatus of claim 2, wherein the calibrated channel response matrix is adapted to be used as a DL channel response matrix when the radio communication system is a Time Division Duplexing TDD communication system.

4. The base station apparatus of claim 2, further comprising:

   a weight generator (315) for generating a weight matrix for a TX vector on the basis of the calibrated channel response matrix; and
   a weight multiplier (303) for multiplying the TX vector by the weight matrix to generate a plurality of antenna signals.

**5.** The base station apparatus of claim 4, further comprising:

> a plurality of IFFT processors for IFFT-processing the generated antenna signals; and
> a plurality of RF processors for converting the IFFT-processed signals into RF signals to be transmitted through the corresponding antennas.

**6.** The base station apparatus of claim 4, wherein the weight matrix generated by the weight generator is a codebook-based precoding matrix or a Singular Vector Decomposition SVD-based eigenvector matrix.

**7.** The base station apparatus of claim 1, wherein the calculator is adapted to calculate calibration values $C(i,j)$ for the $i^{th}$ TX antenna and *the $j^{th}$* RX antenna using Equation $C(i,j) = \dfrac{H(i,j)}{(H_{M \to B}(i,j))^2}$ where $H(i,j)$ and $H_{M \to B}(i,j)$ are the second UL CSI and the first UL CSI.

**8.** The base station apparatus of claim 1, further comprising a transmitter for transmitting a DL pilot signal used for estimating the DL CSI.

**9.** A mobile station apparatus for a radio communication system using multiple antennas, the mobile station apparatus comprising:

> a channel estimator (329) for estimating a downlink DL channel state information CSI using a DL pilot signal received from a base station;
> a sounding signal generator (333) for weighting a sounding signal with the DL CSI to generate a channel calibration sounding signal; and
> a transmitter for transmitting the channel calibration sounding signal to the base station.

**10.** The mobile station apparatus of claim 9, wherein the transmitter comprises:

> a plurality of IFFT processors for mapping the channel calibration sounding signal to a predetermined subcarrier position, IFFT-processing the resulting signal; and
> a plurality of RF processors for converting the IFFT-processed signals into RF signals to transmit the RF signals through the corresponding antennas.

**11.** A method for operating a base station in a radio communication system using multiple antennas, the method comprising the steps of:

> receiving a UL sounding signal to estimate a first UL CSI;
> receiving a UL sounding signal weighted with a DL CSI to estimate a second UL CSI; and
> calculating calibration values for the respective antenna pairs using the first UL CSI and the second UL CSI.

**12.** The method of claim 11, further comprising: calibrating the first UL CSI using the calibration values to obtain a calibrated channel response matrix.

**13.** The method of claim 12, wherein the calibrated channel response matrix is used as a DL channel response matrix when the radio communication system is a TDD communication system.

**14.** The method of claim 12, further comprising:

> generating a weight matrix for a TX vector on the basis of the calibrated channel response matrix; and
> multiplying the TX vector by the weight matrix to generate a plurality of antenna signals.

**15.** The method of claim 14, further comprising:

> processing the generated antenna signals to output the IFFT-processed signals; and
> converting the IFFT-processed signals into RF signals to transmit the RF signals through the corresponding antennas.

**16.** The method of claim 14, wherein the weight matrix is a codebook-based precoding matrix or a SVD-based eigenvector matrix.

**17.** The method of claim 11, wherein calibration values $C(i,j)$ for the $i^{th}$ TX antenna and the $j^{th}$ RX antenna are calculated

using Equation $C(i,j) = \dfrac{H(i,j)}{(H_{M \to B}(i,j))^2}$ where $H(i,j)$ and $H_{M \to B}(i,j)$ are the second UL CSI and the first UL CSI.

**18.** The method of claim 11, further comprising transmitting a DL pilot signal used for estimating the DL CSI.

**19.** A method for operating a mobile station in a radio communication system using multiple antennas, the method comprising the steps of:

receiving a DL pilot signal to estimate a DL CSI;
weighting a sounding signal with the DL CSI to generate a channel calibration sounding signal; and
transmitting the channel calibration sounding signal to a base station.

**20.** The method of claim 19, wherein the step of transmitting the channel calibration sounding signal further comprises:

mapping the channel calibration sounding signal to a predetermined subcarrier position, processing the resulting signal, and outputting the IFFT-processed signals; and
converting the IFFT-processed signals into RF signals to transmit the RF signals through the corresponding antennas.

**21.** A method for calibrating a channel in a radio communication system using multiple antennas, the method comprising the steps of:

estimating, at a transmitter, a first UL CSI using a UL sounding signal received from a receiver;
estimating, at the receiver, a DL CSI using a DL pilot signal received from the transmitter, weighting the UL sounding signal with the DL CSI, and transmitting the DL CSI-weighted sounding signal to the transmitter;
estimating, at the transmitter, a second UL CSI using the DL CSI-weighted sounding signal; and
calculating, at the transmitter, channel calibration values for the respective antenna pairs using the first UL CSI and the second UL CSI.

**22.** The method of claim 21, further comprising calibrating, at the transmitter, the first UL CSI using the calculated channel calibration values to obtain a calibrated channel response matrix.

**23.** The method of claim 22, wherein the calibrated channel response matrix is used as a DL channel response matrix when the radio communication system is a TDD communication system.

**24.** A mobile station apparatus for a radio communication system using multiple antennas, the mobile station apparatus comprising:

a channel estimator (309) for receiving a downlink DL sounding signal to estimate a first DL channel state information (CSI) and receiving a DL sounding signal weighted with a uplink UL CSI to estimate a second DL CSI; and
a calculator (311) for calculating calibration values for the respective antenna pairs using the first DL CSI and the second DL CSI.

**25.** A base station apparatus for a radio communication system using multiple antennas, the mobile station apparatus comprising:

a channel estimator (309) for estimating a uplink UL CSI using a UL pilot signal received from a mobile station;
a sounding signal generator for weighting a sounding signal with the UL CSI to generate a channel calibration sounding signal; and
a transmitter for transmitting the channel calibration sounding signal to the mobile station.

**Patentansprüche**

1. Basisstationsvorrichtung für ein Funkkommunikationssystem, das mehrere Antennen verwendet, wobei die Basisstationsvorrichtung umfasst:

   eine Kanal-Schätzeinrichtung (309), die ein Uplink-Soundingsignal empfängt, um eine erste Uplink-Kanalstatus-Information zu schätzen, und ein mit einer Downlink-Kanalstatus-Information gewichtetes Uplink-Soundingsignal empfängt, um eine zweite Uplink-Kanalstatus-Information zu schätzen; und
   eine Berechnungseinrichtung (311), die Kalibrierungswerte für die jeweiligen Antennenpaare unter Verwendung der ersten Uplink-Kanalstatus-Information und der zweiten Uplink-Kanalstatus-Information berechnet.

2. Basisstationsvorrichtung nach Anspruch 1, die des Weiteren eine Kanal-Kalibriereinrichtung (313) umfasst, die die erste Uplink-Kanalstatus-Information unter Verwendung der Kalibrierungswerte kalibriert, um eine kalibrierte Kanalantwort-Matrix zu gewinnen.

3. Basisstationsvorrichtung nach Anspruch 2, wobei die kalibrierte Kanalantwort-Matrix so eingerichtet ist, dass sie als eine Downlink-Kanalantwort-Matrix verwendet wird, wenn das Funkkommunikationssystem ein Zeitduplex(Time Division Duplexing - TDD)-Kommunikationssystem ist.

4. Basisstationsvorrichtung nach Anspruch 2, die des Weiteren umfasst:

   eine Gewichtungs-Erzeugungseinrichtung (315), die eine Gewichtungs-Matrix für einen TX-Vektor auf Basis der kalibrierten Kanalantwort-Matrix erzeugt; und
   eine Gewichtungs-Multipliziereinrichtung (303), die den TX-Vektor mit der Gewichtungs-Matrix multipliziert, um eine Vielzahl von Antennensignalen zu erzeugen.

5. Basisstationsvorrichtung nach Anspruch 4, die des Weiteren umfasst:

   eine Vielzahl von IFFT-Verarbeitungseinrichtungen für IFFT-Verarbeitung der erzeugten Antennensignale; und
   eine Vielzahl von HF-Verarbeitungseinrichtungen, die die der IFFT-Verarbeitung unterzogenen Signale zum Senden über die entsprechenden Antennen in HF-Signale umwandeln.

6. Basisstationsvorrichtung nach Anspruch 4, wobei die durch die Gewichtungs-Erzeugungseinrichtung erzeugte Gewichtungs-Matrix eine Vorcodier-Matrix auf Codebuch-Basis oder eine Eigenvektor-Matrix auf Basis von Singular Vector Decomposition ist.

7. Basisstationsvorrichtung nach Anspruch 1, wobei die Berechnungseinrichtung so eingerichtet ist, dass sie Kalibrierungswerte C(i,j) für die i-te TX-Antenne und die j-te RX-Antenne unter Verwendung von Gleichung

$$C(i,j) = \frac{H(i,j)}{(H_{M \to B}(i,j))^2}$$

berechnet, wobei H(i,j) und $H_{M \to B}$(i,j) die zweite Uplink-Kanalstatus-Information und die erste Uplink-Kanalstatus-Information sind.

8. Basisstationsvorrichtung nach Anspruch 1, die des Weiteren eine Sendeeinrichtung zum Senden eines Downlink-Pilotsignals umfasst, das zum Schätzen der Downlink-Kanalstatus-Information verwendet wird.

9. Mobilstationsvorrichtung für ein Funkkommunikationssystem, das mehrere Antennen verwendet, wobei die Mobilstationsvorrichtung umfasst:

   eine Kanal-Schätzeinrichtung (329), die eine Downlink-Kanalstatus-Information unter Verwendung eines von einer Basisstation empfangenen Downlink-Pilotsignals schätzt;
   eine Soundingsignal-Erzeugungseinrichtung (333), die ein Soundingsignal mit der Downlink-Kanalstatus-Information gewichtet, um ein Kanalkalibrierungs-Soundingsignal zu erzeugen; und
   eine Sendeeinrichtung zum Senden des Kanalkalibrierungs-Soundingsignals zu der Basisstation.

10. Mobilstationsvorrichtung nach Anspruch 9, wobei die Sendeeinrichtung umfasst:

   eine Vielzahl von IFFT-Verarbeitungseinrichtungen, die das Kanakalibrierungs-Soundingsignal einer vorgegebenen Unterträger-Position zuordnen und IFFT-Verarbeitung des resultierenden Signals durchführen; und eine Vielzahl von HF-Verarbeitungseinrichtungen, die die IFFT-Verarbeitung unterzogenen Signale in HF-Signale umwandeln, um die HF-Signale über die entsprechenden Antennen zu senden.

11. Verfahren zum Betreiben einer Basisstation in einem Funkkommunikationssystem, das mehrere Antennen verwendet, wobei das Verfahren die folgenden Schritte umfasst:

Empfangen eines Uplink-Soundingsignals, um eine erste Uplink-Kanalstatus-Information zu schätzen; Empfangen eines mit einer Downlink-Kanalstatus-Information gewichteten Uplink-Soundingsignals, um eine zweite Uplink-Kanalstatus-Information zu schätzen; und Berechnung von Kalibrierungswerten für die jeweiligen Antennenpaare unter Verwendung der ersten Uplink-Kanalstatus-Information und der zweiten Uplink-Kanalstatus-Information.

12. Verfahren nach Anspruch 11, das des Weiteren umfasst:

Kalibrieren der ersten Uplink-Kanalstatus-Information unter Verwendung der Kalibrierungswerte, um eine kalibrierte Kanalantwort-Matrix zu gewinnen.

13. Verfahren nach Anspruch 12, wobei die kalibrierte Kanalantwort-Matrix als eine Downlink-Kanalantwort-Matrix verwendet wird, wenn das Funkkommunikationssystem ein TDD-Kommunikationssystem ist.

14. Verfahren nach Anspruch 12, das des Weiteren umfasst:

Erzeugen einer Gewichtungs-Matrix für einen TX-Vektor auf Basis der kalibrierten Kanalantwort-Matrix; und Multiplizieren des TX-Vektors mit der Gewichtungs-Matrix, um eine Vielzahl von Antennensignalen zu erzeugen.

15. Verfahren nach Anspruch 14, das des Weiteren umfasst:

Verarbeiten der erzeugten Antennensignale, um die IFFT-Verarbeitung unterzogenen Signale auszugeben; und Umwandeln der IFFT-Verarbeitung unterzogenen Signale in HF-Signale, um die HF-Signale über die entsprechenden Antennen zu senden.

16. Verfahren nach Anspruch 14, wobei die Gewichtungs-Matrix eine Vorcodier-Matrix auf Codebuch-Basis oder eine Eigenvektor-Matrix auf Basis von Singular Vector Decomposition ist.

17. Verfahren nach Anspruch 11, wobei Kalibrierungswerte C(i,j) für die i-te TX-Antenne und die j-te RX-Antenne unter Verwendung von Gleichung $C(i,j) = \dfrac{H(i,j)}{(H_{M \to B}(i,j))^2}$ berechnet werden, wobei H(i,j) und $H_{M \to B}$(i,j) die zweite Uplink-Kanalstatus-Information und die erste Uplink-Kanalstatus-Information sind.

18. Verfahren nach Anspruch 11, das des Weiteren Senden eines Downlink-Pilotsignals umfasst, das zum Schätzen der Downlink-Kanalstatus-Information verwendet wird.

19. Verfahren zum Betreiben einer Mobilstation in einem Funkkommunikationssystem, das mehrere Antennen verwendet, wobei das Verfahren die folgenden Schritte umfasst:

Empfangen eines Downlink-Pilotsignals, um eine Downlink-Kanalstatus-Information zu schätzen; Gewichten eines Soundingsignals mit der Downlink-Kanalstatus-Information, um ein Kanalkalibrierungs-Soundingsignal zu erzeugen; und Senden des Kanalkalkulierungs-Soundingsignals zu einer Basisstation.

20. Verfahren nach Anspruch 19, wobei der Schritt des Sendens des Kanalkalibrierungs-Soundingsignals des Weiteren umfasst:

Zuordnen des Kanalkalibrierungs-Soundingsignals zu einer vorgegebenen Unterträger-Position, Verarbeiten des resultierenden Signals und Ausgeben der IFFT-Verarbeitung unterzogenen Signale; und

Umwandeln der IFFT-Verarbeitung unterzogenen Signale in HF-Signale, um die HF-Signale über die entsprechenden Antennen zu senden.

21. Verfahren zum Kalibrieren eines Signals in einem Funkkommunikationssystem, das mehrere Antennen verwendet, wobei das Verfahren die folgenden Schritte umfasst:

Schätzen einer ersten Uplink-Kanalstatus-Information unter Verwendung eines von einer Empfangseinrichtung empfangenen Uplink-Soundingsignals an einer Sendeeinrichtung;
Schätzen einer Downlink-Kanalstatus-Information unter Verwendung eines von der Sendeeinrichtung empfangenen Downlink-Pilotsignals an der Empfangseinrichtung, Gewichten des Uplink-Soundingsignals mit der Downlink-Kanalstatus-Information und
Senden des mit der Downlink-Kanalstatus-Information gewichteten Soundingsignals zu der Sendeeinrichtung;
Schätzen einer zweiten Uplink-Kanalstatus-Information unter Verwendung des mit der Downlink-Kanalstatus-Information gewichteten Soundingsignals an der Sendeeinrichtung; und
Berechnen von Kanal-Kalibrierungswerten für die jeweiligen Antennenpaare unter Verwendung der ersten Uplink-Kanalstatus-Information und der zweiten Uplink-Kanalstatus-Information an der Sendeeinrichtung.

22. Verfahren nach Anspruch 21, das des Weiteren Kalibrieren der ersten Uplink-Kanalstatus-Information unter Verwendung der berechneten Kanal-Kalibrierungswerte an der Sendeeinrichtung umfasst, um eine kalibrierte Kanalantwort-Matrix zu gewinnen.

23. Verfahren nach Anspruch 22, wobei die kalibrierte Kanalantwort-Matrix als eine Downlink-Kanalantwort-Matrix verwendet wird, wenn das Funkkommunikationssystem ein TDD-Kommunikationssystem ist.

24. Mobilstationsvorrichtung für ein Funkkommunikationssystem, das mehrere Antennen verwendet, wobei die Mobilstationsvorrichtung umfasst:

eine Kanal-Schätzeinrichtung (309), die ein Downlink-Soundingsignal empfängt, um eine erste Downlink-Kanalstatus-Information zu schätzen, und ein mit einer Uplink-Kanalstatus-Information gewichtetes Downlink-Soundingsignal empfängt, um eine zweite Downlink-Kanalstatus-Information zu schätzen; und
eine Berechnungseinrichtung (311) zum Berechnen von Kalibrierungswerten für die jeweiligen Antennenpaare unter Verwendung der ersten Downlink-Kanalstatus-Information und der zweiten Downlink-Kanalstatus-Information.

25. Basisstationsvorrichtung für ein Funkkommunikationssystem, das mehrere Antennen verwendet, wobei die Mobilstationsvorrichtung umfasst:

eine Kanal-Schätzeinrichtung (309), die eine Uplink-Kanalstatus-Information unter Verwendung eines von einer Mobilstation empfangenen Uplink-Pilotsignals schätzt;
eine Soundingsignal-Erzeugungseinrichtung, die ein Soundingsignal mit der Uplink-Kanalstatus-Information gewichtet, um ein Kanalkalibrierungs-Soundingsignal zu erzeugen; und
eine Sendeeinrichtung zum Senden des Kanalkalibrierungs-Soundingsignals zu der Mobilstation.

**Revendications**

1. Dispositif de station de base pour un système de communication par radio utilisant de multiples antennes, le dispositif de station de base comprenant :

un estimateur (309) de voie destiné à recevoir un signal de sondage de liaison montante, UL (pour "UpLink"), pour estimer une première information d'état de voie d'UL, CSI (pour "Information Channel State"), et à recevoir un signal de sondage d'UL pondéré avec une CSI de liaison descendante, DL (pour "DownLink"), pour estimer une seconde CSI d'UL ; et
un calculateur (311) destiné à calculer des valeurs de calibrage pour les paires d'antennes respectives en utilisant la première CSI d'UL et la seconde CSI d'UL.

2. Dispositif de station de base selon la revendication 1, comprenant en outre un calibreur (313) de voie destiné à calibrer la première CSI d'UL en utilisant les valeurs de calibrage pour obtenir une matrice de réponses calibrées de voie.

3. Dispositif de station de base selon la revendication 2, dans lequel la matrice de réponses calibrées de voie est conçue pour être utilisée comme matrice de réponse de voie de DL lorsque le système de communication par radio est un système de communication à duplexage par répartition dans le temps, TDD (pour "Time Division Duplexing").

4. Dispositif de station de base selon la revendication 2, comprenant en outre :

un générateur (315) de poids destiné à engendrer une matrice de poids pour un vecteur d'émission sur la base de la matrice de réponses calibrées de voie ; et
un multiplieur (303) de poids destiné à multiplier le vecteur d'émission par la matrice de poids pour engendrer une pluralité de signaux d'antenne.

5. Dispositif de station de base selon la revendication 4, comprenant en outre :

une pluralité de processeurs de transformée rapide de Fourier inverse (IFFT pour "Inverse Fast Fourier Transform") destinés à traiter par IFFT les signaux d'antenne engendrés ; et
une pluralité de processeurs HF destinés à convertir les signaux traités par IFFT en signaux HF à émettre au moyen des antennes correspondantes.

6. Dispositif de station de base selon la revendication 4, dans lequel la matrice de poids engendrée par le générateur de poids est une matrice de précodage basée sur un dictionnaire de code ou une matrice de vecteurs propres à base de décomposition vectorielle singulière, SVD (pour "Singular Vector Decomposition").

7. Dispositif de station de base selon la revendication 1, dans lequel le calculateur est conçu pour calculer des valeurs de calibrage C(i,j) pour la i-ième antenne d'émission et la j-ième antenne de réception en utilisant l'équation

$$\mathtt{C(i,j)} = \frac{H(i,j)}{(H_{M \to B}(i,j))^2} ,$$

où $H(i,j)$ et $H_{M \to B}(i,j)$ sont la seconde CSI d'UL et la première CSI d'UL.

8. Dispositif de station de base selon la revendication 1, comprenant en outre un émetteur destiné à émettre un signal pilote de DL utilisé pour estimer la CSI de DL.

9. Dispositif de poste mobile pour un système de communication par radio utilisant de multiples antennes, le dispositif de poste mobile comprenant :

un estimateur (329) de voie destiné à estimer une information d'état de voie, CSI, de liaison descendante, DL, en utilisant un signal pilote de DL reçu d'une station de base ;
un générateur (333) de signal de sondage destiné à pondérer un signal de sondage avec la CSI de DL pour engendrer un signal de sondage de calibrage de voie ; et
un émetteur destiné à transmettre, à la station de base, le signal de sondage de calibrage de voie.

10. Dispositif de poste mobile selon la revendication 9, dans lequel l'émetteur comprend :

une pluralité de processeurs d'IFFT destinés à transposer le signal de sondage de calibrage de voie en une position prédéterminée de sous-porteuse, à traiter par IFFT le signal résultant ; et
une pluralité de processeurs HF destinés à convertir les signaux traités par IFFT en signaux HF pour émettre les signaux HF au moyen des antennes correspondantes.

11. Procédé de mise en oeuvre d'une station de base dans un système de communication par radio utilisant de multiples antennes, le procédé comprenant les étapes :

de réception d'un signal de sondage d'UL pour estimer une première CSI d'UL ;
de réception d'un signal de sondage d'UL pondéré avec une CSI de DL pour estimer une seconde CSI d'UL ; et

de calcul de valeurs de calibrage pour les paires d'antennes respectives en utilisant la première CSI d'UL et la seconde CSI d'UL.

12. Procédé selon la revendication 11, comprenant en outre : le calibrage de la première CSI d'UL en utilisant les valeurs de calibrage pour obtenir une matrice de réponses calibrées de voie.

13. Procédé selon la revendication 12, dans lequel la matrice de réponses calibrées de voie est utilisée comme une matrice de réponse de voie de DL lorsque le système de communication par radio est un système de communication à TDD.

14. Procédé selon la revendication 12, comprenant en outre :

la génération d'une matrice de poids pour un vecteur d'émission sur la base de la matrice de réponses calibrées de voie ; et
la multiplication du vecteur d'émission par la matrice de poids pour engendrer une pluralité de signaux d'antenne.

15. Procédé selon la revendication 14, comprenant en outre :

le traitement des signaux d'antenne engendrés pour sortir les signaux traités par IFFT ; et
la conversion des signaux traités par IFFT en signaux HF pour émettre les signaux HF au moyen des antennes correspondantes.

16. Procédé selon la revendication 14, dans lequel la matrice de poids est une matrice de précodage basée sur un dictionnaire de code ou une matrice de vecteurs propres à base de SVD.

17. Procédé selon la revendication 11, dans lequel des valeurs de calibrage C(i,j) pour la i-ième antenne d'émission et la j-ième antenne de réception sont calculées en utilisant l'équation

$$ \mathtt{C(i,j)} \ = \ \frac{H(i,j)}{(H_{M \to B}(i,j))^2} \, , $$

où H(i,j) et $H_{M \to B}$(i,j) sont la seconde CSI d'UL et la première CSI d'UL.

18. Procédé selon la revendication 11, comprenant en outre l'émission d'un signal pilote de DL utilisé pour l'estimation de la CSI de DL.

19. Procédé de mise en oeuvre d'un poste mobile dans un système de communication par radio utilisant de multiples antennes, le procédé comprenant les étapes :

de réception d'un signal pilote de DL pour estimer une CSI de DL ;
de pondération d'un signal de sondage avec la CSI de DL pour engendrer un signal de sondage de calibrage de voie ; et
de transmission, à une station de base, du signal de sondage de calibrage de voie.

20. Procédé selon la revendication 19, dans lequel l'étape de transmission du signal de sondage de calibrage de voie comprend en outre :

la transposition du signal de sondage de calibrage de voie en une position prédéterminée de sous-porteuse, le traitement du signal résultant et la sortie des signaux traités par IFFT ; et
la conversion des signaux traités par IFFT en signaux HF pour émettre les signaux HF au moyen des antennes correspondantes.

21. Procédé de calibrage d'une voie dans un système de communication par radio utilisant de multiples antennes, le procédé comprenant les étapes :

d'estimation, au niveau d'un émetteur, d'une première CSI d'UL en utilisant un signal de sondage d'UL reçu d'un récepteur ;

d'estimation, au niveau du récepteur, d'une CSI de DL en utilisant un signal pilote de DL reçu de l'émetteur, de pondération du signal de sondage d'UL avec la CSI de DL et de transmission, à l'émetteur, du signal de sondage pondéré par la CSI de DL ;

d'estimation, au niveau de l'émetteur, d'une seconde CSI d'UL en utilisant le signal de sondage pondéré par la CSI de DL ; et

de calcul, au niveau de l'émetteur, de valeurs de calibrage de voie pour les paires d'antennes respectives en utilisant la première CSI d'UL et la seconde CSI d'UL.

22. Procédé selon la revendication 21, comprenant en outre le calibrage, au niveau de l'émetteur, de la première CSI d'UL en utilisant les valeurs calculées de calibrage de voies pour obtenir une matrice de réponses calibrées de voie.

23. Procédé selon la revendication 22, dans lequel la matrice de réponses calibrées de voie est utilisée comme une matrice de réponse de voie de DL lorsque le système de communication par radio est un système de communication à TDD.

24. Dispositif de poste mobile pour un système de communication par radio utilisant de multiples antennes, le dispositif de poste mobile comprenant :

un estimateur (309) de voie destiné à recevoir un signal de sondage de liaison descendante, DL, pour estimer une première information d'état de voie (CSI) de DL et à recevoir un signal de sondage de DL pondéré avec une CSI de liaison montante, UL, pour estimer une seconde CSI de DL ; et

un calculateur (311) destiné à calculer des valeurs de calibrage pour les paires d'antennes respectives en utilisant la première CSI de DL et la seconde CSI de DL.

25. Dispositif de station de base pour un système de communication par radio utilisant de multiples antennes, le dispositif de station de base comprenant :

un estimateur (309) de voie destiné à estimer une CSI de liaison montante, UL, en utilisant un signal pilote d'UL reçu d'un poste mobile ;

un générateur de signal de sondage destiné à pondérer un signal de sondage avec la CSI d'UL pour engendrer un signal de sondage de calibrage de voie ; et

un émetteur destiné à transmettre, au poste mobile, le signal de sondage de calibrage de voie.

FIG.1
(PRIOR ART)

FIG.2
(PRIOR ART)

EP 1 764 967 B1

FIG.3

EP 1 764 967 B1

```
                    ┌──────────┐
                    │  START   │
                    └────┬─────┘
                         │
                         ▼
        ┌────────────────────────────────┐
        │     TRANSMIT CHANNEL           │
        │     SOUNDING REQUEST           ├──401
        └────────────────┬───────────────┘
                         │                    ┌───────┐
                         ▼          403       │       │
                ◇────────────────────◇   NO   │       │
                ◇  SOUNDING SIGNAL   ◇────────┘       │
                ◇     RECEIVED?      ◇                │
                ◇────────────────────◇                │
                         │ YES                        │
                         ▼                            │
        ┌────────────────────────────────┐            │
        │     ESTIMATE UL CSI (H_{M→B})   ├──405       │
        └────────────────┬───────────────┘            │
                         │                            │
                         ▼                            │
        ┌────────────────────────────────┐            │
        │     REQUEST CHANNEL            │            │
        │     CALIBRATION PILOT SIGNAL   ├──407       │
        └────────────────┬───────────────┘            │
                         │                    ┌───────┘
                         ▼          409       │
                ◇────────────────────◇   NO   │
                ◇     CHANNEL        ◇────────┘
                ◇ CALIBRATION PILOT SIGNAL ◇
                ◇     RECEIVED?      ◇
                ◇────────────────────◇
                         │ YES
                         ▼
        ┌────────────────────────────────┐
        │     CALCULATE CALIBRATION      │
        │  VALUE FOR EACH ANTENNA PAIR   ├──411
        └────────────────┬───────────────┘
                         │
                         ▼
        ┌────────────────────────────────┐
        │     CALIBRATE UL CSI           ├──413
        └────────────────┬───────────────┘
                         │
                         ▼
                    ┌──────────┐
                    │   END    │
                    └──────────┘
```

# FIG.4

START

501
CHANNEL
SOUNDING REQUEST
RECEIVED?

NO

YES

PERFORM
OTHER MODE — 511

TRANSMIT SOUNDING SIGNAL — 503

505
CALIBRATION
PILOT REQUEST
RECEIVED?

NO

YES

ESTIMATE DL CSI ($H_{3 \rightarrow M}$) — 507

WEIGHT PILOT SIGNAL WITH DL
CSI AND TRANSMIT THE SAME — 509

END

# FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004039022 A